(19) **Europäisches Patentamt / European Patent Office / Office européen des brevets**

(11) **EP 4 576 252 A1**

(12) **EUROPEAN PATENT APPLICATION**

(43) Date of publication:
**25.06.2025 Bulletin 2025/26**

(21) Application number: **24221384.1**

(22) Date of filing: **19.12.2024**

(51) International Patent Classification (IPC):
*H01M 4/36* (2006.01)    *H01M 4/38* (2006.01)
*H01M 4/525* (2010.01)    *H01M 4/583* (2010.01)
*H01M 4/587* (2010.01)    *H01M 4/02* (2006.01)

(52) Cooperative Patent Classification (CPC):
**H01M 4/364; H01M 4/366; H01M 4/386;**
**H01M 4/525; H01M 4/583; H01M 4/587;**
H01M 2004/021; H01M 2004/027; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230187240**

(71) Applicants:
• **SK On Co., Ltd.**
  **Seoul 03161 (KR)**
• **SK Innovation Co., Ltd.**
  **Seoul 03188 (KR)**

(72) Inventors:
• **HWANG, Duck Chul**
  **Daejeon 34124 (KR)**
• **KIM, Jong Hwa**
  **Daejeon 34124 (KR)**
• **MOON, Joon Hyung**
  **Daejeon 34124 (KR)**
• **LEE, Ji Sun**
  **Daejeon 34124 (KR)**

(74) Representative: **Prüfer & Partner mbB**
**Patentanwälte · Rechtsanwälte**
**Sohnckestraße 12**
**81479 München (DE)**

(54) **LITHIUM SECONDARY BATTERY**

(57) A lithium secondary battery includes a cathode including a cathode active material, the cathode active material including a lithium metal oxide that has a form of a secondary particle in which a plurality of primary particles are aggregated and is doped with a doping element, and an anode facing the cathode and including an anode active material, the anode active material including a composite active material of a silicon-containing material and a first carbon-based material, and a second carbon-based active material. An aspect ratio of the primary particles is in a range from 1.4 to 7.0, and a content of the composite active material based on a total weight of the anode active material is in a range from 1 wt% to 50 wt%.

FIG. 3

EP 4 576 252 A1

**Description**

TECHNICAL FIELD

The disclosure of this patent application relates to a a lithium secondary battery. More particularly, the disclosure of this patent application relates to a a lithium secondary battery including a cathode and an anode.

BACKGROUND

A secondary battery which can be charged and discharged repeatedly has been widely employed as a power source of a mobile electronic device such as a camcorder, a mobile phone, a laptop computer, etc. Recently, a battery pack including the secondary battery is being developed and applied as a power source of an eco-friendly vehicle such as a hybrid automobile.

Examples of the secondary battery may include a lithium secondary battery, a nickel-cadmium battery, a nickel-hydrogen battery, and the like. The lithium secondary battery is being actively developed and applied due to high operational voltage and energy density per unit weight, a high charging rate, a compact dimension, etc.

For example, a lithium secondary battery may include an electrode assembly including a cathode, an anode and a separation layer (separator), and an electrolyte solution impregnating the electrode assembly.

The lithium secondary battery may further include, e.g., a pouch-shaped exterior material accommodating the electrode assembly and the electrolyte.

For example, a lithium metal oxide may be used as a cathode active material. When charging/discharging is repeated, damages to a surface of the cathode active material may occur, and side reactions with the electrolyte may occur.

For example, carbon-based or silicon-based active material particles may be used as an anode active material. When charging/discharging is repeated, mechanical and chemical damages such as cracks in the anode active material particles may be caused, and a contact between the anode active material particles may be degraded.

SUMMARY

According to an aspect of the present disclosure, there is provided a lithium secondary battery having improved life-span and power properties.

A lithium secondary battery includes a cathode including a cathode active material, the cathode active material including a lithium metal oxide that has a form of a secondary particle in which a plurality of primary particles are aggregated and is doped with a doping element, and an anode facing the cathode and including an anode active material, the anode active material including a composite active material of a silicon-containing material and a first carbon-based material, and a second carbon-based active material. An aspect ratio of the primary particles is in a range from 1.4 to 7.0, and a content of the composite active material based on a total weight of the anode active material is in a range from 1 wt% to 50 wt%.

In some embodiments, the first carbon-based material may include an amorphous carbon, and the second carbon-based active material may include a crystalline carbon.

In some embodiments, the first carbon-based material may include porous carbon particles.

In some embodiments, the aspect ratio of the primary particles may be in a range from 1.53 to 6.51.

In some embodiments, the lithium metal oxide may include nickel, and a molar fraction of nickel based on the total molar number of all elements excluding lithium and oxygen in the lithium metal oxide may be in a range from 0.5 to 1.

In some embodiments, a molar fraction of nickel based on the total molar numbers of all elements excluding lithium and oxygen in the lithium metal oxide may be in a range from 0.60 to 0.95.

In some embodiments, the doping element may include at least one of Al, Ti, Zr, Ba, Sr, W, Nb, Y, Mg, V, Ta, Mo, La and B.

In some embodiments, the doping element may include at least one of Ti, Zr, W and La.

In some embodiments, the doping element may include two or more different doping elements.

In some embodiments, a weight-based content of the doping element may be in a range from 100 ppm to 15,000 ppm based on a total weight of the lithium metal oxide.

In some embodiments, the weight-based content of the doping element may be in a range from 2,000 ppm to 12,000 ppm based on the total weight of the lithium metal oxide.

In some embodiments, the content of the composite active material based on the total weight of the anode active material may be in a range from 1 wt% to 40 wt%.

In some embodiments, the content of the silicon-containing material based on a total weight of the composite active material may be in a range from 35 wt% to 65 wt%.

In some embodiments, the first carbon-based material may include pores, and a size of the pores may be in a range from 0.1 nm to 20 nm.

In some embodiments, the silicon-containing material may include silicon having an amorphous structure.

A lithium secondary battery according to embodiments of the present disclosure may have improved life-span and capacity properties.

The lithium secondary battery according to embodiments may include a lithium metal oxide doped with a doping element as a cathode active material. The doping element may suppress structural deterioration of the cathode active material during charging/discharging. Accordingly, deterioration of life-span and capacity properties due to damages to the cathode active material may be suppressed.

A silicon-based material and a carbon-based material may be used together as an anode active material of the lithium secondary battery according to embodiments. Accordingly, deterioration of life-span properties due to expansion of the silicon-based material may be suppressed. Additionally, relatively low capacity properties of the carbon-based material may be supplemented by the silicon-based material.

The lithium secondary battery of the present disclosure may be widely applied in green technology fields such as an electric vehicle, a battery charging station, a solar power generation, a wind power generation, etc., using a battery, etc. The lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIGS. 1 and 2 are a schematic plan view and a schematic cross-sectional view, respectively, illustrating a lithium secondary battery in accordance with example embodiments.

FIGS. 3 to 5 are scanning electron microscope (SEM) images of cross-sections of cathode active material particles in accordance with example embodiments.

FIG. 6 is a schematic cross-sectional illustrating a composite active material in accordance with example embodiments.

DETAILED DESCRIPTION OF THE EMBODIMENTS

According to embodiments of the present disclosure, a lithium secondary battery including a cathode that includes a lithium metal oxide having a secondary particle form in which a plurality of primary particles are aggregated, and an anode including a composite active material and a carbon-based active material is provided.

Hereinafter, unless otherwise defined in this disclosure, an expression that a part such as a layer, a film, a thin film, a region, a plate, etc., is "on " the other part includes the case where the part is directly on the other part and the case where there is another part therebetween.

Hereinafter, the terms "first" and "second" used herein are not intended to limit the number or an order of objects indicated by the term "first" and "second", but are relatively used to distinguish different elements.

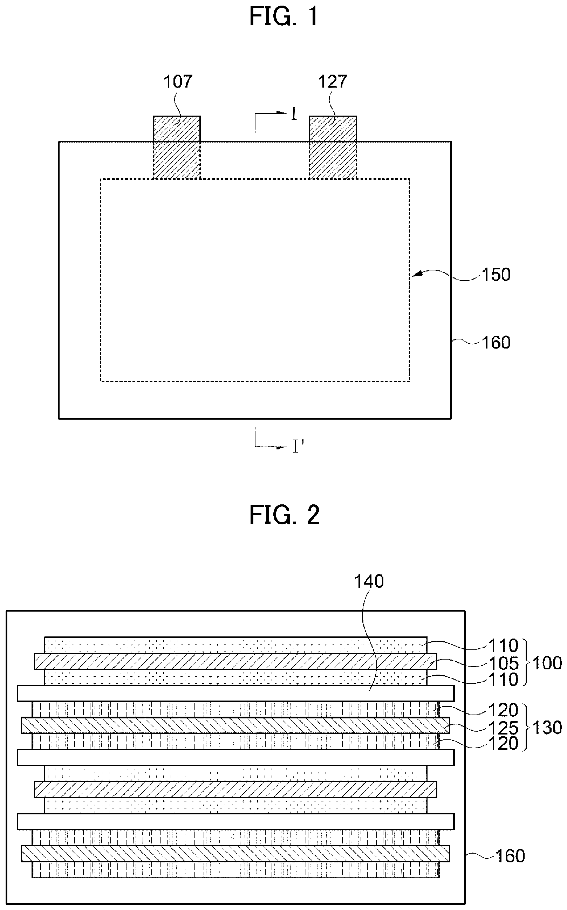

FIGS. 1 and 2 are a schematic plan view and a schematic cross-sectional view, respectively, illustrating a lithium secondary battery in accordance with example embodiments. For example, FIG. 2 is a cross-sectional view taken along a line I-I' of FIG. 1.

Referring to FIGS. 1 and 2, a lithium secondary battery may include a cathode 100, an anode 130 facing the cathode 100, and a separator 140 interposed between the cathode 100 and the anode 130.

The cathode 100 may include a cathode current collector 105 and a cathode active material layer 110 disposed on at least one surface of the cathode current collector 105.

The cathode current collector 105 may include stainless steel, nickel, aluminum, titanium or an alloy thereof. The cathode current collector 105 may include aluminum or stainless steel surface-treated with carbon, nickel, titanium or silver. A thickness of the cathode current collector 105 may be in, e.g., a range from 5 $\mu$m to 50 $\mu$m.

The cathode active material layer 110 may include a cathode active material. The cathode active material may include a compound capable of reversibly intercalating and de-intercalating lithium ions.

The cathode active material includes a lithium metal oxide having a form of a secondary particle in which a plurality of primary particles are aggregated.

The primary particles have an aspect ratio in a range from 1.4 to 7.0.

When the aspect ratio of the primary particles is less than 1.4, the primary particles may not be stably aggregated. For example, cracks of the secondary particle may occur during repeated charging/discharging, and generation of cracks or voids in the secondary particle in which the primary particles are aggregated may be increased, thereby deteriorating structural stability. Accordingly, life-span properties of the cathode active material may be deteriorated.

The primary particle may be morphologically divided from the secondary particle. The secondary particle may be a particle in which a plurality of the primary particles are aggregated to be substantially regarded or observed as one particle. For example, in the secondary particle, boundaries of the primary particles may be observed in a scanning electron microscope (SEM) cross-sectional image.

For example, the primary particles may refer to individual sub-particles, not an aggregate included in the secondary particle.

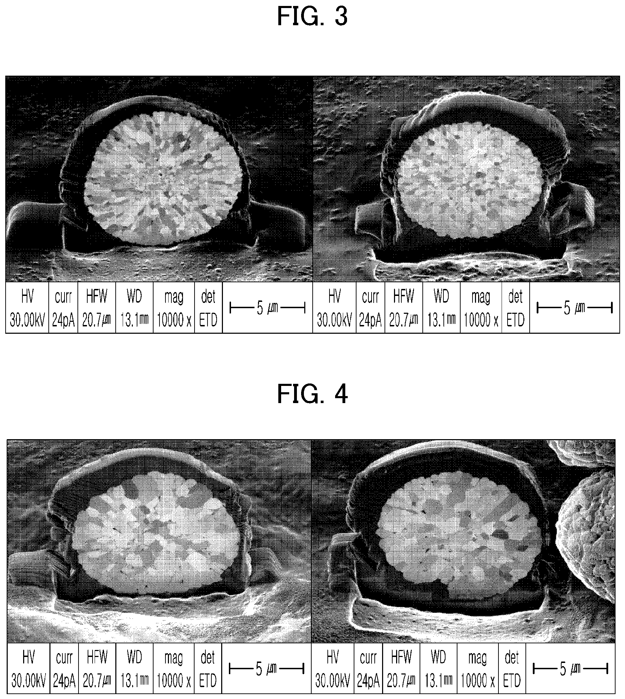

FIGS. 3 to 5 are scanning electron microscope (SEM) images of cross-sections of cathode active material particles in accordance with example embodiments. Specifically, FIGS. 3 to 5 are SEM images of cross-sections of any two cathode active material particles among cathode active material particles having a secondary particle structure in which primary particles having an aspect ratio of 2.58, 1.42 and 6.51, respectively, are aggregated.

Referring to FIG. 3 to FIG. 5, when the aspect ratio of the primary particles is in a range from 1.42 to 6.51, the secondary particle in which the primary particles are stably aggregated may be obtained.

When the aspect ratio of the primary particles is greater than 7.0, a length of a long axis, which may serve as a movement path of the lithium ions, may be excessively increased to degrade power properties.

As used herein, the term "aspect ratio" refers to a ratio of a length of a long axis (a major axis) to a length of a short axis (a minor axis) of the primary particle. For example, the aspect ratio refers to a ratio of a longest diameter to a shortest diameter among diameters of a cross-section of the primary particle.

For example, as the aspect ratio becomes closer to 1, spherical particles are represented. As the aspect ratio becomes larger, rod-shaped particles are represented.

In some embodiments, the aspect ratio of the primary particle may be in a range from 1.42 to 7.0, or from 1.5 to 7.0. In the above range, the primary particles may be aggregated to stably form the secondary particle. Accordingly, the life-span and power properties may be improved while suppressing a shape collapse of the secondary particle due to the repeated charging/discharging of the cathode active material.

In some embodiments, the aspect ratio of the primary particles may be in a range from 1.53 to 6.51, from 2.0 to 6.51, from 2.58 to 6.51, from 2.58 to 6.0, from 3.0 to 6.0, or from 2.58 to 5.02. In the above range, the life-span and power properties may be further improved.

The cathode active material includes a lithium metal oxide. The primary particle may be the lithium metal oxide, and the secondary particle formed by aggregation of the primary particles may also be the lithium metal oxide.

In some examples, the cathode active material or the lithium metal oxide may include nickel. For example, the cathode active material or the lithium metal oxide may have a layered structure or a crystal structure represented by Chemical Formula 1 below.

[Chemical Formula 1] $\quad$ $Li_xNi_aM_bO_{2+z}$

In Chemical Formula 1, $0.8 \leq x \leq 1.2$, $0.5 \leq a \leq 1$, $0 \leq b \leq 0.5$, $-0.2 \leq z \leq 0.2$, and $a+b=1$. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element such as Al that contributes to capacity/power activity of the cathode active material together with Co or Mn.

For example, the cathode active material or the lithium metal oxide particle may include a layered structure or a crystal structure represented by Chemical Formula 1-1.

[Chemical Formula 1-1] $\quad$ $Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.8 \leq x \leq 1.2$, $0.5 \leq a \leq 1$, $0 \leq b1+b2 \leq 0.5$, $-0.2 \leq z \leq 0.2$, and $a+b1+b2=1$.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

In some embodiments, a mole fraction of nickel among total moles of all elements excluding lithium and oxygen in the lithium metal oxide (e.g., a mole fraction of nickel among total moles of nickel, cobalt, and manganese) may be in a range from 0.5 to 1, from 0.5 to 0.99, from 0.6 to 0.99, from 0.7 to 0.99, or from 0.7 to 0.98. In this range, power and life-span properties of the cathode active material may both be improved.

For example, the capacity properties may be improved by nickel elements, structural stability may be improved by remaining elements excluding nickel. For example, the capacity properties may be improved by increasing a content of the nickel elements, and the lithium metal oxide may be used in a reduced amount. Thus, a thickness of an electrode (e.g., the cathode) may be reduced, and the power properties may be improved.

In an embodiment, the mole fraction of nickel among the total moles of all elements excluding lithium and oxygen in the lithium metal oxide (e.g., the mole fraction of nickel among the total moles of nickel, cobalt and manganese) may be in a range from 0.60 to 0.98, from 0.60 to 0.95, from 0.75 to 0.95, from 0.75 to 0.94, from 0.70 to 0.94, or from 0.8 to 0.94. In this range, the power and the life-span properties of the cathode active material may be further improved.

The cathode active material(e.g., the lithium metal oxide) may further include a doping element or a coating element. The coating element or the doping element may may penetrate through the primary particle to be present at an inside of the primary particle.

In an embodiment, the coating element or the doping element may be formed on a surface of the primary particle (e.g., between the primary particles). In an embodiment, the coating element or the doping element may be located on a surface of the secondary particle in which the primary particle is aggregated.

In some embodiments, the doping element or the coating element may include at least one of Al, Ti, Zr, Ba, Sr, W, Nb, Y, Mg, V, Ta, Mo, La and B. Accordingly, structural stability of the primary particles or the secondary particle in which the primary particles are aggregated may be improved by the doping element, thereby improving the life-span properties. Additionally, electrical conductivity of the cathode active material may be improved, thereby improving the power properties.

In an embodiment, the doping element or the coating element may include at least one of Ti, Zr, W and La. Accordingly, the life-span and power properties of the cathode active material may be further improved. In some embodiments, the doping element or the coating element may be used in combination of two or more doping elements or coating elements. For example, as the doping element or coating element, a combination of Al and Y, Zr and Mo, Sr and W, Nb and Ti, Mg and B, Ta and Ba, or La and V may be used. Accordingly, the life-span and power properties of the cathode active material may be further improved.

In an embodiment, the doping element or the coating element may be used in a combination of three elements. For example, a combination of Ti, Sr and Y, or Al, Zr and W may be used. Accordingly, the life-span and power properties of the cathode active material may be further improved. In some embodiments, a weight-based content of the doping element or the coating element may be in a range from 100 ppm to 15,000 ppm, from 300 ppm to 15,000 ppm, or from 1,000 ppm to 14,000 ppm based on a total weight of the cathode active material (e.g., the lithium metal oxide). In the content range, the doping element or the coating element may be located while maintaining an appropriate distance. Accordingly, the electrical conductivity of the cathode active material may be improved while suppressing side reactions due to the doping element or the coating element. Thus, the life-span and output properties may be improved.

In an embodiment, the weight-based content of the doping element or the coating element may be in a range from 2,000 ppm to 12,000 ppm, from 2,000 ppm to 10,000 ppm, from 2,000 ppm to 8,000 ppm, from 2,000 ppm to 6,000 ppm, or from 2,000 ppm to 4,000 ppm based on the total weight of the cathode active material (e.g., the lithium metal oxide). In the above content range, the power and life-span of the cathode active material may be further improved.

In some embodiments, the cathode active material may further include a lithium cobalt oxide-based active material, a lithium manganese oxide-based active material, a lithium nickel oxide-based active material, or a lithium metal phosphate-based active material (e.g., $LiFePO_4$) together with the lithium metal oxide.

In some embodiments, the cathode active material may further include a Mn-rich active material, an LLO (Li rich Layered Oxide)/OLO (Over Lithiated Oxide) active material, or a Co-less active material having a chemical structure or a crystal structure represented by Chemical Formula 2 together with the lithium metal oxide.

[Chemical Formula 2] $\quad p[Li_2MnO_3] \cdot (1-p)[Li_gJO_2]$

In Chemical Formula 2, $0<p<1$, $0.9 \leq q \leq 1.2$, and J may include at least one element among Mn, Ni, Co, Fe, Cr, V, Cu, Zn, Ti, Al, Mg and B.

For example, the above-described cathode active material may be mixed in a solvent to prepare a cathode slurry.

The cathode slurry may be coated on a cathode current collector, and then dried and pressed to form the cathode active material layer 110. For example, the coating process may include a gravure coating, a slot die coating, a multi-layered simultaneous die coating, an imprinting, a doctor blade coating, a dip coating, a bar coating, a casting, etc. The cathode active material layer 110 may further include a binder, and optionally may further include a conductive material, a thickener, etc.

Non-limiting examples of the solvent used in the preparation of the cathode active material layer 110 include N-methyl-2-pyrrolidone (NMP), dimethylformamide, dimethylacetamide, N,N-dimethylaminopropylamine, ethylene oxide, tetrahydrofuran, or the like.

The binder may include polyvinylidenefluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR), or the like. In an embodiment, a PVDF-based binder may be used as the cathode binder.

The conductive material may be added to enhance conductivity of the cathode active material layer 110 and/or mobility of lithium ions or electrons. For example, the conductive material may include a carbon-based conductive material such as graphite, carbon black, acetylene black, Ketjen black, graphene, a carbon nanotube, a vapor-grown carbon fiber (VGCF), a carbon fiber, or the like, and/or a metal-based conductive material including tin, tin oxide, titanium oxide, a perovskite material such as $LaSrCoO_3$ and $LaSrMnO_3$., or the like.

The cathode active material layer 110 may further include a thickener and/or a dispersant. For example, the cathode active material layer 110 may further include a thickener such as carboxy methyl cellulose (CMC).

The anode 130 may include a cathode current collector 125 and an anode active material layer 120 disposed on at least one surface of the anode current collector 125.

Non-limiting examples of the anode current collector 125 include a copper foil, a nickel foil, a stainless steel foil, a titanium foil, a nickel foam, a copper foam, a polymer substrate coated with a conductive metal, or the like. A thickness of the anode current collector 125 may be in a range from from 5 $\mu$m to 50 $\mu$m.

The anode active material layer 120 includes an anode active material. A material capable of adsorbing and desorbing lithium ions may be used as the anode active material.

The anode active material includes a composite active material including a silicon-containing material and a first carbon-based material, and a second carbon-based active material.

In some embodiments, the silicon-containing material may include silicon having an amorphous structure. For example, the silicon-containing material may be silicon having an amorphous structure. Accordingly, life-span properties of the anode active material may be improved.

The term "amorphous silicon" used herein may indicate that a shape of a single silicon located at an inside of a particle is amorphous or that a particle is excessively small and a particle size is not substantially measurable using a Scherrer equation.

In some embodiments, a crystallite size of the silicon-containing material measured through an X-ray diffraction (XRD) analysis may be in a range from 0.1 nm to 7 nm, from 0.1 nm to 4 nm, or from 1 nm to 4 nm. In the above range, an expansion of the silicon-containing material during charging and discharging may be reduced, thereby improving a capacity retention. Accordingly, the life-span properties of the anode active material may be improved.

The crystallite size may be measured by the X-ray diffraction (XRD) analysis. The crystallite size may be calculated by the Scherrer equation represented by Equation 1 using a full width at half maximum (FWHM) obtained from the XRD analysis.

[Equation 1]

$$L = \frac{0.9\lambda}{\beta \cos \Theta}$$

In Equation 1, L represents a crystallite size (nm), $\lambda$ represents a X-ray wavelength (nm), $\beta$ represents a full width at half maximum (rad) of the corresponding peak, and $\theta$ represents a diffraction angle (rad). In some embodiments, the full width at half maximum in the XRD analysis for measuring the crystallite size may be measured from a peak of a (111) plane.

For example, the silicon-containing material may include silicon (Si), SiOx (0<x<2), SiHx (0<x<4), etc.

In an embodiment, the silicon-containing material may be silicon (Si).

In some embodiments, the first carbon-based material may include pores at a surface and an inside thereof. For example, the first carbon-based material may be a porous particle including a plurality of pores. Accordingly, the silicon-containing material may be located at the inside of the pores of the first carbon-based material. Thus, cracks due to a difference in volume expansion ratios of the carbon-based active material and the silicon-containing active material during the charging and discharging may be prevented, thereby suppressing an exposure of the anode active material to the electrolyte solution.

In an embodiment, a size of the pores included in the first carbon-based material may be in a range from 0.1 nm to 20 nm, from 0.1 nm to 15 nm, from 0.1 nm to 10 nm, or 0.1 nm or more and less than 10 nm. In the above range, the difference in volume expansion ratios of the carbon-based active material and the silicon-based active material may be further reduced.

For example, the first carbon-based material and the second carbon-based active material may each independently include a crystalline carbon or an amorphous carbon.

Examples of the amorphous carbon include hard carbon, soft carbon, coke, a mesocarbon microbead (MCMB), a mesophase pitch-based carbon fiber (MPCF), or the like.

Examples of the crystalline carbon include a graphite-based carbon such as natural graphite, artificial graphite, a graphitized coke, a graphitized MCMB, a graphitized MPCF, or the like.

For example, the first carbon-based material and the second carbon-based active material may include an activated carbon, a carbon nanotube (CNT), a carbon nano-wire, graphene, a carbon fiber, carbon black, graphite, a porous carbon including a microporous carbon, a mesoporous carbon and/or a macroporous carbon, a pyrolyzed cryogel, a pyrolyzed xerogel, a pyrolyzed aerogel, or the like.

In some embodiments, the first carbon-based material may include an amorphous carbon, and the second carbon-based active material may include a crystalline carbon. Accordingly, the silicon-containing material may stably form a composite with the first carbon-based material. Additionally, even when the composite active material and the second carbon-based active material are used together as the anode active material, the composite active material and the second carbon-based active material may be prevented from being agglomerated.

In some embodiments, the first carbon-based material may include porous carbon particles. Accordingly, the silicon-containing material may be stably deposited or may form the composite at the inside of the first carbon-based material.

In some embodiments, a content of the first carbon-based material based on a total weight of the composite active material may be in a range from 35 wt% to 65 wt%, from 40 wt% to 65 wt%, or from 40 wt% to 60 wt%. In the content range, life-span properties of the anode active material may be improved.

The composite active material may be manufactured by depositing the silicon-containing material on the first carbon-based material.

For example, the first carbon-based material may be prepared. The first carbon-based material may include pores having the sizes as described above.

The first carbon-based material may be activated to obtain an activated first carbon-based material. The activated first carbon-based material may include pores having a size of less than 10 nm.

For example, the activation may be performed by a physical activation method in which the first carbon-based material and a gas reactive with the first carbon-based material (e.g., a steam, carbon dioxide, or a mixture of the steam, carbon dioxide and an inert gas) are introduced into a reactor and heat-treated at a temperature in a range from 700 °C to 1,000 °C.

For example, the activation may be performed by a chemical activation method in which the first carbon-based material may be activated by being mixing with an acidic or basic solution (e.g., KOH, $Na_2CO_3$, NaOH, $H_3PO_4$, etc.).

After injecting a silicon-containing gas (e.g., silane) into the activated first carbon-based material, a heat treatment may be performed at a temperature of 100 °C to 600° C. Accordingly, the silicon-containing material may be deposited in the pores of the activated first carbon-based material to obtain the composite active material.

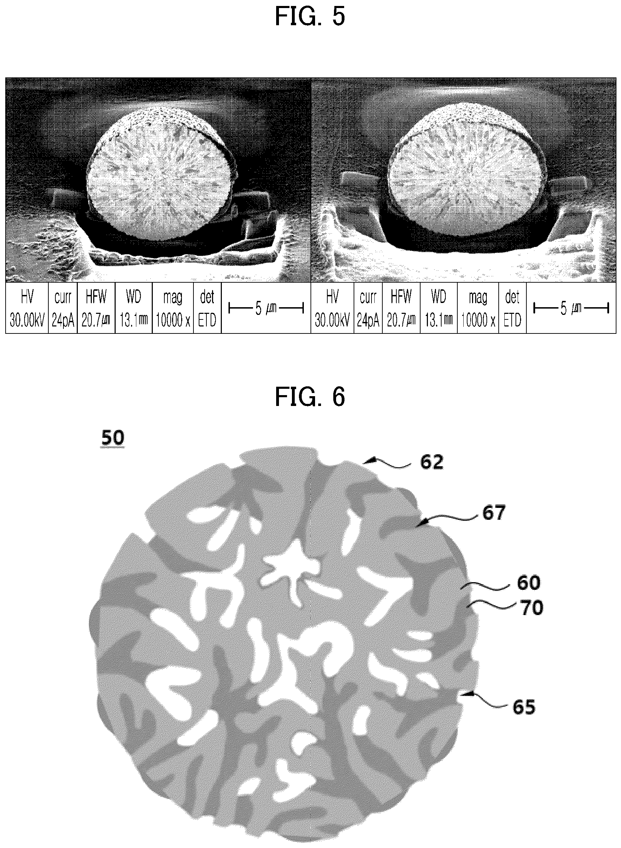

FIG. 6 is a schematic cross-sectional view illustrating a composite active material in accordance with example embodiments.

Referring to FIG. 6, the composite active material 50 may include a first carbon-based material 60 including pores 65 and a silicon-containing material 70 formed on a surface of the first carbon-based material 60. For example, the silicon-containing material may be coated or deposited on the surface of the first carbon-based material 60. Accordingly, volume expansion of the silicon-containing material 70 may be alleviated by the pores 65, and cracks generated due to a high expansion ratio of silicon may be suppressed. Thus, the life-span properties of the secondary battery may be improved.

The pores 65 of the first carbon-based material 60 may include a shape indented from an outermost portion of the first carbon-based material 60 into an inside of the first carbon-based material 60. For example, the pores 65 may include open pores that may be opened to an outside of the first carbon-based material 60.

The term "surface of the first carbon-based material 60" used herein may refer to an outer surface 62 of the first carbon-based material 60, an inner surface 67 of the pores 65, or the outer surface 62 of the first carbon-based material 60 and the inner surface 67 of the pores 65.

For example, the silicon-containing material 70 may be coated or deposited on at least a portion of the outer surface 62 of the first carbon-based material 60.

For example, the silicon-containing material 70 may be coated or deposited on at least a portion of the inner surface 67 of the pore 65.

For example, the silicon-containing material 70 may be coated or deposited on at least a portion of the outer surface 62 of the first carbon-based material 60 and at least a portion of the inner surface 67 of the pore 65.

A content of the composite active material based on the total weight of the anode active material is in a range from 1 wt% to 50 wt%.

When the anode active material includes the silicon-containing material (e.g., the silicon-containing material included in the composite active material), capacity properties may be improved, but the life-span properties may be deteriorated. The deterioration of the life-span properties may be prevented or reduced by doping (or coating) the cathode active material with the doping element (or the coating element). However, when the content of the composite active material based on the total weight of the anode active material is less than 1 wt%, the effect of doping (or coating) the cathode active material with the doping element (or the coating element) to improve the deterioration of the life-span properties may not be practically implemented.

When the content of the composite active material based on the total weight of the anode active material exceeds 50 wt%, the content of the silicon-containing material may be increased, thereby increasing a volume expansion ratio of the anode active material. Accordingly, cracks may occur in the anode active material to deteriorate the life-span properties.

In some embodiments, the content of the composite active material based on the total weight of the anode active material may be in a range from 1 wt% to 40 wt%, from 5 wt% to 40 wt%, from 5 wt% to 30 wt%, from 5 wt% to 25 wt%, from 10 wt% to 25 wt%, or from 10 wt% to 20 wt%. In the above content range, the life-span properties and capacity properties may be improved and balanced.

For example, the anode slurry may be prepared by mixing the anode active material in a solvent. The anode slurry may be coated on the anode current collector 125, and then dried and pressed to form the anode active material layer 120. For example, the coating process may include a gravure coating, a slot die coating, a multi-layered simultaneous die coating, an imprinting, a doctor blade coating, a dip coating, a bar coating, a casting, or the like. The anode active material layer 120 may further include a binder, and optionally may further include a conductive material, a thickener, or the like.

Non-limiting examples of the solvent for the anode active material layer 120 include water, pure water, deionized water, distilled water, ethanol, isopropanol, methanol, acetone, n-propanol, t-butanol, etc.

The above-described materials that can be used when preparing the cathode may be used as the binder, the conductive material and the thickener.

In some embodiments, a styrene-butadiene rubber (SBR)-based binder, carboxymethyl cellulose (CMC), a polyacrylic acid-based binder, a poly(3,4-ethylenedioxythiophene) (PEDOT)-based binder, etc., may be used as the anode binder.

The separator 140 may be interposed between the cathode 100 and the anode 130. An electrical short circuit between the cathode 100 and the anode 130 may be prevented by the separator 140 while maintaining an ion flow. For example, a thickness of the separator 140 may be in a range from 10 $\mu$m to 20 $\mu$m, but the present disclosure is not limited thereto.

For example, the separator 140 may include a porous polymer film or a porous nonwoven fabric. The porous polymer film may include a polyolefin polymer such as an ethylene polymer, a propylene polymer, an ethylene/butene copolymer, an ethylene/hexene copolymer, an ethylene/methacrylate copolymer, or the like.

The porous nonwoven fabric may include a high-melting point glass fiber, a polyethylene terephthalate fiber, or the like. The separator 140 may include a ceramic material. For example, inorganic particles may be coated on the polymer film or dispersed in the polymer film to improve heat resistance.

The separator 140 may have a single-layered or a multi-layered structure including the above-described polymer film and/or nonwoven fabric.

In example embodiments, an electrode assembly 150 may be formed by repeatedly arranging the cathode 100, the anode 130 and the separator 140. In some embodiments, the electrode assembly 150 may be a winding type, a stacking type, a z-folding type, or a stack-folding type.

The electrode assembly 150 may be accommodated in a case 160 together with an electrolyte solution to define a lithium secondary battery. In example embodiments, a non-aqueous electrolyte solution may be used as the electrolyte solution.

The non-aqueous electrolyte solution may include a lithium salt as an electrolyte and an organic solvent. The lithium salt may be expressed as, e.g., $Li^+X^-$, and an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, or the like. These may be used alone or in a combination of two or more therefrom.

The organic solvent may include an organic compound that has a sufficient solubility of the lithium salt and an additive and is not reactive in the battery. The organic solvent may include, e.g., a carbonate-based solvent, an ester-based solvent, an ether-based solvent, a ketone-based solvent, an alcohol-based solvent and/or an aprotic solvent.

Examples of the carbonate-based solvent include propylene carbonate (PC), ethylene carbonate (EC), butylene carbonate, diethyl carbonate (DEC), dimethyl carbonate. DMC), ethyl methyl carbonate (EMC), methylpropyl carbonate, ethylpropyl carbonate, dipropyl carbonate, vinylene carbonate, or the like.

Examples of the ester-based solvent may include methyl acetate (MA), ethyl acetate (EA), n-propyl acetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), gamma-butyrolactone (GBL), decanolide, valerolactone, mevalonolactone, caprolactone, or the like.

Examples of the ether-based organic solvent may include dibutyl ether, tetraethylene glycol dimethyl ether (TEGDME), diethylene glycol dimethyl ether (DEGDME), dimethoxy ethane, diethoxy ethane, tetrahydrofuran (THF), 2-methyltetrahydrofuran, or the like.

The ketone-based solvent may include, for example, cyclohexanone.

The alcohol-based solvent may include, for example, ethyl alcohol, isopropyl alcohol, or the like.

The aprotic solvent may include, e.g., dimethyl sulfoxide, acetonitrile, sulfolane, propylene sulfite, or the like.

In some embodiments, the electrolyte solution may further include an additive. The additive may include, e.g., a cyclic carbonate compound, a fluorine-substituted carbonate compound, a sultone compound, a cyclic sulfate compound, a cyclic sulfite compound, a phosphate compound, a borate compound, or the like. These may be used alone or in a combination of two or more therefrom.

The cyclic carbonate-based compound may include vinylene carbonate (VC), vinyl ethylene carbonate (VEC), etc.

The fluorine-substituted carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

For example, electrode tabs (a cathode tab and an anode tab) may protrude from the cathode current collector 105 and the anode current collector 125 to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

Examples and Comparative Examples

Comparative Example 1

(1) Fabrication of cathode

Secondary particles (hereinafter, referred to as CAM-1) in the form of an aggregation of primary particles having an aspect ratio of 2.58, no doping elements and a composition of $LiNi_{0.5}Co_{0.2}Mn_{0.3}O_2$.

The aspect ratio was calculated as a ratio of the longest diameter to the shortest diameter among diameters of a cross-section of the primary particle by measuring the cross-section of the primary particle using a scanning electron microscope (SEM).

A slurry was prepared by mixing CAM-1 as an active material, Denka Black as a conductive material, and polyvinylidene fluoride (PVDF) as a binder in a weight ratio of 92:5:3. The slurry was uniformly coated on an aluminum foil having a thickness of 15 μm, dried at 130°C, and then pressed to prepare a cathode for a lithium secondary battery.

(2) Fabrication of anode

1) Preparation of first carbon-based particle

Phenol and formaldehyde were mixed in a molar ratio of 1:2, and 1.5 wt% of triethylamine was added and reacted for 4 hours at 85°C and 160 rpm (stirring) to synthesize a resol oligomer.

A mixture in which 1 g of polyvinyl alcohol (PVA) was dispersed in a water dispersible medium was introduced into the resol oligomer to prepare a stabilized suspension of the resol oligomer.

3 g of hexamethylene tetramine (HMTA) was added to the suspension as a curing agent, and the reaction was performed at 98°C and 400 rpm (stirring) for 12 hours to prepare a cured resol oligomer.

The cured resol oligomer was classified using a sieve and washed with water ($H_2O$). Unreacted monomer and oligomer were removed using ethanol, and dried to obtain a preliminary first carbon-based material.

Thereafter, the preliminary first carbon-based material was fired (a first carbonization) at 600°C for 6 hours in a nitrogen atmosphere and fired (a second carbonization) at 900°C for 6 hours in a steam atmosphere to prepare a first carbon-based material.

The first carbon-based material was porous carbon particles, and a pore size was about 5 nm.

The pore size was measured with a surface area analyzer (ASAP-2420) manufactured by Micromeritics. Specifically, the pore size of the first carbon-based material was achieved by measuring a maximum peak position of a Barrett-Joyner-Halenda (BJH) pore size distribution curve obtained from a nitrogen gas isothermal adsorption and desorption curve (nitrogen gas isotherm) of the first carbon-based material.

2) Coating silicon-containing material

A silane gas was injected into a CVD coater at a flow rate of 50 mL/min to 100 mL/min, and a silicon-containing material was deposited to have a content of 45 wt% based on a total weight of a composite active material at a ramping rate of 5°C/min to 20°C/min.

3) Fabrication of anode

An anode active material was prepared by mixing the composite active material and artificial graphite as a second carbon-based active material in a weight ratio of 1:9.

An anode slurry including 90 wt% of the anode active material, 4 wt% of KS6 as a flake type conductive material, 3 wt% of styrene-butadiene rubber (SBR) as a binder, and 3 wt% of carboxymethyl cellulose (CMC) as a thickener was prepared. The anode slurry was uniformly coated, dried and pressed on a copper foil having a thickness of 15 $\mu$m to prepare an anode.

(3) Fabrication of lithium secondary battery

Each of the cathode and the anode prepared as described above was cut into a predetermined size and stacked, and a cell was formed with a separator (polyethylene, thickness: 15 $\mu$m) interposed between the cathode and the anode. Tab portions of the cathode and the anode were welded, respectively. The welded assembly of cathode/separator/anode was placed in a pouch, and three sides were sealed excluding an electrolyte injection side. A region around the electrode tab was included in the sealing portion. An electrolyte solution was injected through the the electrolyte injection side, and the electrolyte injection side was also sealed. Thereafter, an impregnation was performed for 12 hours or more to prepare a lithium secondary battery.

In a preparation of the electrolyte solution, a 1 M LiPF$_6$ solution was prepared using a mixed solvent of EC/EMC/DEC (25/45/30: volume ratio). 3 wt% of fluoroethylene carbonate (FEC), 1 wt% of 1,3-propensultone (PRS), and 0.5 wt% of lithium bis(oxalato)borate (LiBOB) were added to the solution based on a total weight of the electrolyte solution.

Thereafter, pre-charging was performed at a current (2.5 A) corresponding to 0.25 C for 36 minutes. After one hour, degassing was performed, aging was performed for more than 24 hours, and then formation charging and discharging were performed (charging condition: CC-CV 0.2C 4.2V 0.05C CUT-OFF, discharging condition: CC 0.2C 2.5V CUT-OFF). Thereafter, standard charging and discharging were performed (charging condition: CC-CV 0.5C 4.2V 0.05 CUT-OFF, discharging condition: CC 0.5C 2.5V CUT-OFF).

Examples 1 to 7 and Comparative Examples 2 to 7

A lithium secondary battery was manufactured by the same manner as that in Comparative Example 1, except that the composition of the cathode active material, the type and content of the doping element were changed as shown in Table 1 below.

Experimental Example

(1) Evaluation on life-span property at room temperature (25°C)

Charging (CC-CV 0.5C 4.2V 0.05C CUT-OFF) and discharging (CC 0.5C 2.75V CUT-OFF) were repeated by 500 cycles for the lithium secondary batteries manufactured according to Examples and Comparative Examples. A room temperature life-span property was measured by calculating a discharge capacity at the 500th cycle times as a percentage based on the 1st cycle discharge capacity.

Room temperature life-span property (%) = (a discharge capacity at the 500th cycle/a discharge capacity at the 1st cycle) $\times$ 100

(2) Evaluation on power property

A power property of each lithium secondary battery manufactured according to Examples and Comparative Examples was measured by a Hybrid Pulse Power Characterization (HPPC) by Freedom Car Battery Test Manual (HPPC).

The evaluation results are shown in Table 1 below.

[Table 1]

| | cathode active material (abbreviation) | Ni/Co/Mn (mol ratio) | doping element | doping content (ppm) | aspect ratio | mixing ratio of anode active material (second carbon-based active material/ composite active material) (wt%) | life-span (%) | power (W/kg) |
|---|---|---|---|---|---|---|---|---|
| Example 1 | CAM-8 | 50/20/30 | Al | 2,000 | 2.58 | 90/10 | 93.7 | 2,845 |
| Example 2 | CAM-9 | 60/20/20 | Al | 2,000 | 2.58 | 90/10 | 95.2 | 2,863 |
| Example 3 | CAM-10 | 70/15/15 | Al | 2,000 | 2.58 | 90/10 | 91.4 | 2,884 |
| Example 4 | CAM-11 | 80/10/10 | Al | 2,000 | 2.58 | 90/10 | 86.6 | 2,914 |
| Example 5 | CAM-12 | 90/5/5 | Al | 2,000 | 2.58 | 90/10 | 83.6 | 2,970 |
| Example 6 | CAM-13 | 94/3/3 | Al | 2,000 | 2.58 | 90/10 | 82.2 | 3,056 |
| Example 7 | CAM-14 | 98/1/1 | Al | 2,000 | 2.58 | 90/10 | 77.7 | 3,071 |
| Comparative Example 1 | CAM-1 | 50/20/30 | - | - | 2.58 | 90/10 | 92.6 | 2,592 |
| Comparative Example 2 | CAM-2 | 60/20/20 | - | - | 2.58 | 90/10 | 88.3 | 2,606 |
| Comparative Example 3 | CAM-3 | 70/15/15 | - | - | 2.58 | 90/10 | 83.5 | 2,619 |
| Comparative Example 4 | CAM-4 | 80/10/10 | - | - | 2.58 | 90/10 | 78.5 | 2,646 |
| Comparative Example 5 | CAM-5 | 90/5/5 | - | - | 2.58 | 90/10 | 75.3 | 2,700 |
| Comparative Example 6 | CAM-6 | 94/3/3 | - | - | 2.58 | 90/10 | 72.6 | 2,781 |
| Comparative Example 7 | CAM-7 | 98/1/1 | - | - | 2.58 | 90/10 | 65.4 | 2,786 |

Referring to Table 1, in Examples 1 to 7 including the doping element, the life-span properties were 77.7% or more and the power properties were 2,845 W/kg or more.

FIG. 3 includes scanning electron microscope images of cross-sections of any two cathode active material particles in the cathode active material particles according to Example 5. Referring to FIG. 3, when $LiNi_{0.9}Co_{0.05}Mn_{0.05}O_2$ having an aspect ratio of 2.58 and being doped with Al in an amount of 2,000 ppm as primary particles was used, the primary particles were stably aggregated to form a secondary particle.

In Comparative Examples 1 to 7 devoid of the doping element, the life-span and power properties were degraded compared to those from Examples in which other conditions were the same.

Examples 8 to 36 and Comparative Examples 8 to 13

A lithium secondary battery was manufactured by the same method as that in Comparative Example 1, except that the type and content of the doping element and the aspect ratio were changed as shown in Table 2 below.

[Table 2]

| | cathode active material (abbre-viation) | Ni/Co/Mn (mol ratio) | doping element | doping content (ppm) | aspect ratio | mixing ratio of anode active material (second carbon-based active material/composite active material) (wt%) | life-span (%) | power (W/kg) |
|---|---|---|---|---|---|---|---|---|
| Example 8 | CAM-19 | 95/5/5 | Al | 100 | 1.42 | 90/10 | 71.8 | 2,716 |
| Example 9 | CAM-20 | 95/5/5 | Al | 100 | 1.53 | 90/10 | 74.0 | 2,714 |
| Example 10 | CAM-21 | 95/5/5 | Al | 100 | 2.58 | 90/10 | 76.1 | 2,705 |
| Example 11 | CAM-22 | 95/5/5 | Al | 100 | 5.02 | 90/10 | 79.1 | 2,703 |
| Example 12 | CAM-23 | 95/5/5 | Al | 100 | 6.51 | 90/10 | 81.3 | 2,597 |
| Example 13 | CAM-24 | 95/5/5 | Al | 300 | 1.42 | 90/10 | 71.9 | 2,929 |
| Example 14 | CAM-25 | 95/5/5 | Al | 300 | 1.53 | 90/10 | 78.3 | 2,926 |
| Example 15 | CAM-26 | 95/5/5 | Al | 300 | 2.58 | 90/10 | 81.3 | 2,916 |
| Example 16 | CAM-27 | 95/5/5 | Al | 300 | 5.02 | 90/10 | 85.5 | 2,912 |
| Example 17 | CAM-28 | 95/5/5 | Al | 300 | 6.51 | 90/10 | 88.6 | 2,741 |
| Example 18 | CAM-29 | 95/5/5 | Al | 2,000 | 1.42 | 90/10 | 72.0 | 2,986 |
| Example 19 | CAM-30 | 95/5/5 | Al | 2,000 | 1.53 | 90/10 | 80.3 | 2,980 |
| Example 20 | CAM-31 | 95/5/5 | Al | 2,000 | 5.02 | 90/10 | 87.9 | 2,965 |
| Example 21 | CAM-32 | 95/5/5 | Al | 2,000 | 6.51 | 90/10 | 91.2 | 2,836 |
| Example 22 | CAM-33 | 95/5/5 | Al | 4,000 | 1.42 | 90/10 | 72.2 | 3,062 |
| Example 23 | CAM-34 | 95/5/5 | Al | 4,000 | 1.53 | 90/10 | 81.0 | 3,060 |
| Example 24 | CAM-35 | 95/5/5 | Al | 4,000 | 2.58 | 90/10 | 84.8 | 3,051 |
| Example 25 | CAM-36 | 95/5/5 | Al | 4,000 | 5.02 | 90/10 | 89.4 | 3,046 |
| Example 26 | CAM-37 | 95/5/5 | Al | 4,000 | 6.51 | 90/10 | 93.0 | 2,929 |
| Example 27 | CAM-38 | 95/5/5 | Al | 12,000 | 1.42 | 90/10 | 72.4 | 2,902 |
| Example 28 | CAM-39 | 95/5/5 | Al | 12,000 | 1.53 | 90/10 | 82.0 | 2,899 |
| Example 29 | CAM-40 | 95/5/5 | Al | 12,000 | 2.58 | 90/10 | 85.4 | 2,889 |
| Example 30 | CAM-41 | 95/5/5 | Al | 12,000 | 5.02 | 90/10 | 90.2 | 2,888 |
| Example 31 | CAM-42 | 95/5/5 | Al | 12,000 | 6.51 | 90/10 | 94.0 | 2,730 |
| Example 32 | CAM-43 | 95/5/5 | Al | 15,000 | 1.42 | 90/10 | 72.4 | 2,795 |
| Example 33 | CAM-44 | 95/5/5 | Al | 15,000 | 1.53 | 90/10 | 82.0 | 2,793 |
| Example 34 | CAM-45 | 95/5/5 | Al | 15,000 | 2.58 | 90/10 | 85.2 | 2,781 |
| Example 35 | CAM-46 | 95/5/5 | Al | 15,000 | 5.02 | 90/10 | 90.5 | 2,779 |
| Example 36 | CAM-47 | 95/5/5 | Al | 15,000 | 6.51 | 90/10 | 93.8 | 2,600 |
| Comparative Example 8 | CAM-15 | 95/5/5 | - | - | 1.42 | 90/10 | 71.3 | 2,714 |

(continued)

| | cathode active material (abbre-viation) | Ni/Co/Mn (mol ratio) | doping element | doping content (ppm) | aspect ratio | mixing ratio of anode active material (second carbon-based active material/composite active material) (wt%) | life-span (%) | power (W/kg) |
|---|---|---|---|---|---|---|---|---|
| Comparative Example 9 | CAM-16 | 95/5/5 | - | - | 1.53 | 90/10 | 73.0 | 2,711 |
| Comparative Example 10 | CAM-17 | 95/5/5 | - | - | 5.02 | 90/10 | 78.3 | 2,697 |
| Comparative Example 11 | CAM-18 | 95/5/5 | - | - | 6.51 | 90/10 | 80.3 | 2,565 |
| Comparative Example 12 | CAM-92 | 90/5/5 | Al | 2,000 | 1.05 | 90/10 | 69.8 | 2,992 |
| Comparative Example 13 | CAM-93 | 90/5/5 | Al | 2,000 | 7.05 | 90/10 | 92.5 | 2,796 |

Referring to Table 2, in Examples 8 to 36 in which the doping element was included and the aspect ratio was in a range from 1.4 to 7.0, and the doping element content was in a range from 100 ppm to 15,000 ppm, the life-span properties were 71.8% or more, and the power properties were 2,597 W/kg or more.

FIG. 4 includes scanning electron microscope images of cross-sections of any two cathode active material particles in the cathode active material particles according to Example 18. Referring to FIG. 4, when $LiNi_{0.9}Co_{0.05}Mn_{0.05}O_2$ having an aspect ratio of 1.42 and being doped with Al in an amount of 2,000 ppm as primary particles was used, the primary particles were stably aggregated to form a secondary particle.

FIG. 5 includes scanning electron microscope images of cross sections of any two cathode active material particles in the cathode active material particles according to Example 21. Referring to FIG. 5, when $LiNi_{0.9}Co_{0.05}Mn_{0.05}O_2$ having an aspect ratio of 6.51 and being doped with Al in an amount of 2,000 ppm as primary particles was used, the primary particles were stably aggregated to form a secondary particle.

In Examples 19 to 21, 23 to 26, and 28 to 31 in which the aspect ratio was in a range from 1.53 to 6.51 and the doping element content was in a range from 2,000 ppm to 12,000 ppm, the life-span and power properties were slightly improved.

In Comparative Examples 8 to 11 devoid of the doping element, the life-span and power properties were degraded compared to those from Examples in which other conditions were the same.

In Comparative Example 12 including the doping element and having the aspect ratio less than 1.4, the life-span property was degraded compared to those from Examples in which other conditions were the same.

In Comparative Example 13 including the doping element and having the aspect ratio greater than 7.0, the power property was degraded compared to those from Examples in which other conditions were the same.

Examples 37 to 80

A lithium secondary battery was manufactured by the same method as that in Comparative Example 1, except that the type and content of the doping element were changed as shown in the following Table 3.

[Table 3]

| | cathode active material (abbreviation) | Ni/Co/Mn (mol ratio) | doping element | doping content (ppm) | aspect ratio | mixing ratio of anode active material (second carbon-based active material/ composite active material) (wt%) | life-span (%) | power (W/kg) |
|---|---|---|---|---|---|---|---|---|
| Example 37 | CAM-48 | 90/5/5 | Ti | 2,000 | 2.58 | 90/10 | 84.4 | 3,024 |
| Example 38 | CAM-49 | 90/5/5 | Ti | 4,000 | 2.58 | 90/10 | 86.9 | 3,105 |
| Example 39 | CAM-50 | 90/5/5 | Zr | 2,000 | 2.58 | 90/10 | 83.9 | 3,051 |
| Example 40 | CAM-51 | 90/5/5 | Zr | 4,000 | 2.58 | 90/10 | 86.1 | 3,132 |
| Example 41 | CAM-52 | 90/5/5 | Ba | 2,000 | 2.58 | 90/10 | 84.6 | 2,997 |
| Example 42 | CAM-53 | 90/5/5 | Ba | 4,000 | 2.58 | 90/10 | 87.4 | 3,024 |
| Example 43 | CAM-54 | 90/5/5 | Sr | 2,000 | 2.58 | 90/10 | 83.9 | 2,943 |
| Example 44 | CAM-55 | 90/5/5 | Sr | 4,000 | 2.58 | 90/10 | 86.0 | 2,970 |
| Example 45 | CAM-56 | 90/5/5 | W | 2,000 | 2.58 | 90/10 | 84.9 | 3,024 |
| Example 46 | CAM-57 | 90/5/5 | W | 4,000 | 2.58 | 90/10 | 87.8 | 3,132 |
| Example 47 | CAM-58 | 90/5/5 | Nb | 2,000 | 2.58 | 90/10 | 84.2 | 2,943 |
| Example 48 | CAM-59 | 90/5/5 | Nb | 4,000 | 2.58 | 90/10 | 86.6 | 2,997 |
| Example 49 | CAM-60 | 90/5/5 | Y | 2,000 | 2.58 | 90/10 | 83.7 | 2,916 |
| Example 50 | CAM-61 | 90/5/5 | Y | 4,000 | 2.58 | 90/10 | 85.8 | 2,970 |
| Example 51 | CAM-62 | 90/5/5 | Mg | 2,000 | 2.58 | 90/10 | 82.6 | 2,862 |
| Example 52 | CAM-63 | 90/5/5 | Mg | 4,000 | 2.58 | 90/10 | 85.3 | 2,916 |
| Example 53 | CAM-64 | 90/5/5 | V | 2,000 | 2.58 | 90/10 | 82.4 | 2,970 |

(continued)

| | cathode active material (abbreviation) | Ni/Co/Mn (mol ratio) | doping element | doping content (ppm) | aspect ratio | mixing ratio of anode active material (second carbon-based active material/composite active material) (wt%) | life-span (%) | power (W/kg) |
|---|---|---|---|---|---|---|---|---|
| Example 54 | CAM-65 | 90/5/5 | V | 4,000 | 2.58 | 90/10 | 84.7 | 3,024 |
| Example 55 | CAM-66 | 90/5/5 | Ta | 2,000 | 2.58 | 90/10 | 84.9 | 2,943 |
| Example 56 | CAM-67 | 90/5/5 | Ta | 4,000 | 2.58 | 90/10 | 87.1 | 3,024 |
| Example 57 | CAM-68 | 90/5/5 | Mo | 2,000 | 2.58 | 90/10 | 82.7 | 2,916 |
| Example 58 | CAM-69 | 90/5/5 | Mo | 4,000 | 2.58 | 90/10 | 85.6 | 2,970 |
| Example 59 | CAM-70 | 90/5/5 | La | 2,000 | 2.58 | 90/10 | 83.8 | 2,970 |
| Example 60 | CAM-71 | 90/5/5 | La | 4,000 | 2.58 | 90/10 | 86.0 | 3,051 |
| Example 61 | CAM-72 | 90/5/5 | B | 2,000 | 2.58 | 90/10 | 84.7 | 2,916 |
| Example 62 | CAM-73 | 90/5/5 | B | 4,000 | 2.58 | 90/10 | 87.5 | 2,754 |
| Example 63 | CAM-74 | 90/5/5 | Al/Y | 1,000/1,000 | 2.58 | 90/10 | 87.8 | 3,159 |
| Example 64 | CAM-75 | 90/5/5 | Al/Y | 2,000/2,000 | 2.58 | 90/10 | 89.9 | 3,375 |
| Example 65 | CAM-76 | 90/5/5 | Zr/Mo | 1,000/1,000 | 2.58 | 90/10 | 88.3 | 3,186 |
| Example 66 | CAM-77 | 90/5/5 | Zr/Mo | 2,000/2,000 | 2.58 | 90/10 | 91.2 | 3,321 |
| Example 67 | CAM-78 | 90/5/5 | Sr/W | 1,000/1,000 | 2.58 | 90/10 | 87.6 | 3,267 |
| Example 68 | CAM-79 | 90/5/5 | Sr/W | 2,000/2,000 | 2.58 | 90/10 | 90.1 | 3,402 |
| Example 69 | CAM-80 | 90/5/5 | Nb/Ti | 1,000/1,000 | 2.58 | 90/10 | 87.2 | 3,213 |
| Example 70 | CAM-81 | 90/5/5 | Nb/Ti | 2,000/2,000 | 2.58 | 90/10 | 90.0 | 3,348 |

(continued)

| | cathode active material (abbreviation) | Ni/Co/Mn (mol ratio) | doping element | doping content (ppm) | aspect ratio | mixing ratio of anode active material (second carbon-based active material/ composite active material) (wt%) | life-span (%) | power (W/kg) |
|---|---|---|---|---|---|---|---|---|
| Example 71 | CAM-82 | 90/5/5 | Mg/B | 1,000/1,000 | 2.58 | 90/10 | 88.9 | 3,200 |
| Example 72 | CAM-83 | 90/5/5 | Mg/B | 2,000/2,000 | 2.58 | 90/10 | 91.0 | 3,429 |
| Example 73 | CAM-84 | 90/5/5 | Ta/Ba | 1,000/1,000 | 2.58 | 90/10 | 88.5 | 3,218 |
| Example 74 | CAM-85 | 90/5/5 | Ta/Ba | 2,000/2,000 | 2.58 | 90/10 | 91.6 | 3,348 |
| Example 75 | CAM-86 | 90/5/5 | La/V | 1,000/1,000 | 2.58 | 90/10 | 89.5 | 3,175 |
| Example 76 | CAM-87 | 90/5/5 | La/V | 2,000/2,000 | 2.58 | 90/10 | 93.0 | 3,402 |
| Example 77 | CAM-88 | 90/5/5 | Ti/Sr/Y | 700/700/60 0 | 2.58 | 90/10 | 89.6 | 3,181 |
| Example 78 | CAM-89 | 90/5/5 | Ti/Sr/Y | 1,400/1,400 /1,200 | 2.58 | 90/10 | 92.2 | 3,348 |
| Example 79 | CAM-90 | 90/5/5 | Al/Zr/W | 700/700/60 0 | 2.58 | 90/10 | 89.4 | 3,194 |
| Example 80 | CAM-91 | 90/5/5 | Al/Zr/W | 1,400/1,400 /1,200 | 2.58 | 90/10 | 91.7 | 3,413 |

Referring to Table 3, in Examples 37 to 80 in which at least one of Al, Ti, Zr, Ba, Sr, W, Nb, Y, Mg, V, Ta, Mo, La and B was used as the doping element, and the doping element content was in a range from 2,000 ppm to 4,000 ppm, the life-span properties were 82.4% or more, and the power properties were 2,754 W/kg or more.

The life-span and power properties were slightly improved in Examples 37 to 40, 45, 46, 59 and 60 in which at least one of Ti, Zr, W and La was used as the doping element.

In Examples 63 to 80 using at least two doping elements for the doping element, the life-span and power properties were improved.

Examples 81 to 86 and Comparative Examples 14 to 32

A lithium secondary battery was manufactured by the same method as that in Comparative Example 1, except that the type and content of the doping element and the mixing ratio of the anode active material were changed as shown in Table 4 below.

[Table 4]

| | cathode active material (abbreviation) | Ni/Co/Mn (mol ratio) | doping element | doping content (ppm) | aspect ratio | mixing ratio of anode active material (second carbon-based active material/ composite active material) (wt%) | life-span (%) | power (W/kg) |
|---|---|---|---|---|---|---|---|---|
| Example 81 | CAM-12 | 95/5/5 | Al | 2,000 | 2.58 | 99/1 | 96.9 | 2,857 |
| Example 82 | CAM-12 | 95/5/5 | Al | 2,000 | 2.58 | 95/5 | 96.7 | 2,928 |
| Example 83 | CAM-12 | 95/5/5 | Al | 2,000 | 2.58 | 80/20 | 78.7 | 3,044 |
| Example 84 | CAM-12 | 95/5/5 | Al | 2,000 | 2.58 | 70/30 | 74.2 | 3,095 |
| Example 85 | CAM-12 | 95/5/5 | Al | 2,000 | 2.58 | 60/40 | 72 | 3,133 |
| Example 86 | CAM-12 | 95/5/5 | Al | 2,000 | 2.58 | 50/50 | 67.2 | 3,214 |
| Comparative Example 14 | CAM-12 | 95/5/5 | - | - | 2.58 | 100/0 | 90.9 | 2,565 |
| Comparative Example 15 | CAM-12 | 95/5/5 | - | - | 2.58 | 99.5/0.5 | 89.9 | 2,579 |
| Comparative Example 16 | CAM-12 | 95/5/5 | - | - | 2.58 | 99/1 | 89.4 | 2,592 |
| Comparative Example 17 | CAM-5 | 95/5/5 | - | - | 2.58 | 95/5 | 88.9 | 2,646 |
| Comparative Example 18 | CAM-5 | 95/5/5 | - | - | 2.58 | 80/20 | 70.2 | 2,754 |
| Comparative Example 19 | CAM-5 | 95/5/5 | - | - | 2.58 | 70/30 | 66.7 | 2,808 |
| Comparative Example 20 | CAM-5 | 95/5/5 | - | - | 2.58 | 60/40 | 64.7 | 2,835 |
| Comparative Example 21 | CAM-5 | 95/5/5 | - | - | 2.58 | 50/50 | 60.0 | 2,916 |
| Comparative Example 22 | CAM-5 | 95/5/5 | - | - | 2.58 | 40/60 | 56.0 | 2,997 |
| Comparative Example 23 | CAM-5 | 95/5/5 | - | - | 2.58 | 30/70 | 52.7 | 3,024 |
| Comparative Example 24 | CAM-5 | 95/5/5 | - | - | 2.58 | 20/80 | 50.2 | 3,105 |
| Comparative Example 25 | CAM-5 | 95/5/5 | - | - | 2.58 | 10/90 | 45.9 | 3,186 |
| Comparative Example 26 | CAM-5 | 95/5/5 | - | - | 2.58 | 0/100 | 42.9 | 3,267 |
| Comparative Example 27 | CAM-12 | 95/5/5 | Al | 2,000 | 2.58 | 40/60 | 59.6 | 3,306 |
| Comparative Example 28 | CAM-12 | 95/5/5 | Al | 2,000 | 2.58 | 30/70 | 55.8 | 3,338 |

(continued)

| | cathode active material (abbreviation) | Ni/Co/Mn (mol ratio) | doping element | doping content (ppm) | aspect ratio | mixing ratio of anode active material (second carbon-based active material/ composite active material) (wt%) | life-span (%) | power (W/kg) |
|---|---|---|---|---|---|---|---|---|
| Comparative Example 29 | CAM-12 | 95/5/5 | Al | 2,000 | 2.58 | 20/80 | 52.7 | 3,424 |
| Comparative Example 30 | CAM-12 | 95/5/5 | Al | 2,000 | 2.58 | 10/90 | 48.0 | 3,522 |
| Comparative Example 31 | CAM-12 | 95/5/5 | Al | 2,000 | 2.58 | 0/100 | 44.5 | 3,606 |
| Comparative Example 32 | CAM-12 | 95/5/5 | Al | 2,000 | 2.58 | 99.5/0.5 | 91.4 | 2,842 |

Referring to Table 4, in Examples 81 to 86 in which the anode active material including the doping element and including the composite active material in an amount of 1 wt% to 50 wt% based on a total weight of the anode active material, the life-span properties were 67.2% or more and the power properties were 2,850 W/kg or more.

In Examples 82 to 85 where the content of the second carbon-based active material was in a range from 60 wt% to 95 wt% based on the total weight of the anode active material (the content of the composite active material was 5 wt% to 40 wt%), the life-span properties were 70% or more and the power properties were 2,900 W/kg or more.

In Comparative Examples 14 to 21 devoid of the doping element, the life-span and power properties were degraded compared to those from Examples in which other conditions were the same.

In Comparative Examples 22 to 26 in which the anode active material that did not include the doping element and included the second carbon-based active material in an amount less than 50 wt% based on the total weight of the anode active material was used, the life-span properties were less than 60%.

In Comparative Examples 27 to 31 which included the doping element in an amount less than 50 wt% based on the total weight of the anode active material, the life-span properties were less than 60%.

In Comparative Example 32 including the doping element and including the composite active material in an amount less than 1 wt% based on the total weight of the anode active material, the life-span properties were relatively degraded compared to those from Examples in which other conditions were the same.

**Claims**

1. A lithium secondary battery, comprising:

   a cathode comprising a cathode active material, the cathode active material comprising a lithium metal oxide that has a form of a secondary particle in which a plurality of primary particles are aggregated and is doped with a doping element; and
   an anode facing the cathode and including an anode active material, the anode active material comprising a composite active material of a silicon-containing material and a first carbon-based material, and a second carbon-based active material;
   wherein an aspect ratio of the primary particles is in a range from 1.4 to 7.0, and
   a content of the composite active material based on a total weight of the anode active material is in a range from 1 wt% to 50 wt%.

2. The lithium secondary battery according to claim 1, wherein the first carbon-based material comprises an amorphous carbon, and the second carbon-based active material comprises a crystalline carbon.

3. The lithium secondary battery according to any one of claims 1 and 2, wherein the first carbon-based material comprises porous carbon particles.

4. The lithium secondary battery according to any one of claims 1 to 3, wherein the aspect ratio of the primary particles is in a range from 1.53 to 6.51.

5. The lithium secondary battery according to any one of claims 1 to 4, wherein the lithium metal oxide comprises nickel, and a molar fraction of nickel based on the total molar number of all elements excluding lithium and oxygen in the lithium metal oxide is in a range from 0.5 to 1.

6. The lithium secondary battery according to claim 5, wherein a molar fraction of nickel based on the total molar numbers of all elements excluding lithium and oxygen in the lithium metal oxide is in a range from 0.60 to 0.95.

7. The lithium secondary battery according to any one of claims 1 to 6, wherein the doping element comprises at least one of Al, Ti, Zr, Ba, Sr, W, Nb, Y, Mg, V, Ta, Mo, La and B.

8. The lithium secondary battery according to claim 7, wherein the doping element comprises at least one of Ti, Zr, W and La.

9. The lithium secondary battery according to claim 7, wherein the doping element comprises two or more different doping elements.

10. The lithium secondary battery according to any one of claims 1 to 9, wherein a weight-based content of the doping element is in a range from 100 ppm to 15,000 ppm based on a total weight of the lithium metal oxide.

11. The lithium secondary battery according to claim 10, wherein the weight-based content of the doping element is in a range from 2,000 ppm to 12,000 ppm based on the total weight of the lithium metal oxide.

12. The lithium secondary battery according to any one of claims 1 to 11, wherein the content of the composite active material based on the total weight of the anode active material is in a range from 1 wt% to 40 wt%.

13. The lithium secondary battery according to any one of claims 1 to 11, wherein the content of the silicon-containing material based on a total weight of the composite active material is in a range from 35 wt% to 65 wt%.

14. The lithium secondary battery according to any one of claims 1 to 13, wherein the first carbon-based material includes pores, and a size of the pores is in a range from 0.1 nm to 20 nm.

15. The lithium secondary battery according to any one of claims 1 to 14, wherein the silicon-containing material comprises silicon having an amorphous structure.

# FIG. 1

# FIG. 2

FIG. 3

| HV | curr | HFW | WD | mag | det | ⊢——5 µm——⊣ | HV | curr | HFW | WD | mag | det | ⊢——5 µm——⊣ |
|---|---|---|---|---|---|---|---|---|---|---|---|---|---|
| 30.00kV | 24pA | 20.7µm | 13.1mm | 10000 x | ETD | | 30.00kV | 24pA | 20.7µm | 13.1mm | 10000 x | ETD | |

FIG. 4

| HV | curr | HFW | WD | mag | det | ⊢——5 µm——⊣ | HV | curr | HFW | WD | mag | det | ⊢——5 µm——⊣ |
|---|---|---|---|---|---|---|---|---|---|---|---|---|---|
| 30.00kV | 24pA | 20.7µm | 13.1mm | 10000 x | ETD | | 30.00kV | 24pA | 20.7µm | 13.1mm | 10000 x | ETD | |

## FIG. 5

| HV | curr | HFW | WD | mag | det | ⊢——5 $\mu$m——⊣ | HV | curr | HFW | WD | mag | det | ⊢——5 $\mu$m——⊣ |
|---|---|---|---|---|---|---|---|---|---|---|---|---|---|
| 30.00kV | 24pA | 20.7$\mu$m | 13.1mm | 10000 x | ETD | | 30.00kV | 24pA | 20.7$\mu$m | 13.1mm | 10000 x | ETD | |

## FIG. 6

| | Europäisches Patentamt European Patent Office Office européen des brevets | **EUROPEAN SEARCH REPORT** | **Application Number** EP 24 22 1384 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/378445 A1 (YOO SEOK KEUN [KR] ET AL) 23 November 2023 (2023-11-23) * claims 1-19; figures 1-4 * ----- | 1-15 | INV. H01M4/36 H01M4/38 H01M4/525 |
| A | KR 102 553 749 B1 (SK ON CO LTD [KR]; SK INNOVATION CO LTD [KR]) 11 July 2023 (2023-07-11) * claims 1-15; figures 1-4 * & EP 4 424 644 A1 (SK ON CO LTD [KR]; SK INNOVATION CO LTD [KR]) 4 September 2024 (2024-09-04) ----- | 1-15 | H01M4/583 H01M4/587 H01M4/02 |
| A | EP 4 113 659 A1 (SK ON CO LTD [KR]) 4 January 2023 (2023-01-04) * claims 1-15; figures 1-6 * ----- | 1-15 | |
| A | EP 4 037 030 A1 (LG CHEMICAL LTD [KR]) 3 August 2022 (2022-08-03) * claims 1-15; figures 1-5 * ----- | 1-15 | |
| A | JP 7 171656 B2 (ECOPRO BM CO LTD) 15 November 2022 (2022-11-15) * claims 1-11; figures 1-13 * ----- | 1-15 | TECHNICAL FIELDS SEARCHED (IPC) H01M |

The present search report has been drawn up for all claims

| Place of search | Date of completion of the search | Examiner |
|---|---|---|
| Munich | 15 April 2025 | Liu, Yonghe |

EPO FORM 1503 03.82 (P04C01)

## ANNEX TO THE EUROPEAN SEARCH REPORT
## ON EUROPEAN PATENT APPLICATION NO.

EP 24 22 1384

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| US 2023378445 A1 | 23-11-2023 | CN 117096297 A | 21-11-2023 |
| | | EP 4293748 A2 | 20-12-2023 |
| | | KR 20230161157 A | 27-11-2023 |
| | | US 2023378445 A1 | 23-11-2023 |
| KR 102553749 B1 | 11-07-2023 | CN 118486820 A | 13-08-2024 |
| | | EP 4424644 A1 | 04-09-2024 |
| | | KR 102553749 B1 | 11-07-2023 |
| | | KR 20240125409 A | 19-08-2024 |
| | | US 2024282951 A1 | 22-08-2024 |
| EP 4113659 A1 | 04-01-2023 | CN 115548420 A | 30-12-2022 |
| | | DE 202022105422 U1 | 02-11-2022 |
| | | EP 4113659 A1 | 04-01-2023 |
| | | KR 20230001761 A | 05-01-2023 |
| | | US 2022416241 A1 | 29-12-2022 |
| EP 4037030 A1 | 03-08-2022 | CN 114728811 A | 08-07-2022 |
| | | EP 4037030 A1 | 03-08-2022 |
| | | JP 7508170 B2 | 01-07-2024 |
| | | JP 2023500940 A | 11-01-2023 |
| | | KR 20210097058 A | 06-08-2021 |
| | | US 2022411283 A1 | 29-12-2022 |
| | | WO 2021154024 A1 | 05-08-2021 |
| JP 7171656 B2 | 15-11-2022 | CN 112397708 A | 23-02-2021 |
| | | CN 118943356 A | 12-11-2024 |
| | | EP 3786116 A1 | 03-03-2021 |
| | | JP 7171656 B2 | 15-11-2022 |
| | | JP 2021034370 A | 01-03-2021 |
| | | KR 20210022199 A | 03-03-2021 |
| | | US 2021057731 A1 | 25-02-2021 |

EPO FORM P0459

For more details about this annex : see Official Journal of the European Patent Office, No. 12/82